# EUROPEAN PATENT APPLICATION

(11) **EP 3 239 769 A1**
(43) Date of publication of application: **01.11.2017**
(21) Application number: 16788405.5
(22) Date of filing: 06.07.2016
(51) Int. Cl.: G02F 1/1333

(54) **FRONT FRAME, DISPLAY MODULE AND DISPLAY DEVICE**

(30) Priority: 18.03.2016 CN 201620215560 U; 18.03.2016 CN 201610158127
(71) Applicant: LE Holdings (Beijing) Co., Ltd., Beijing 100025 (CN); Le Shi Zhi Xin Electronic Technology (Tianjin) Limited, Tianjin 300467 (CN)
(72) Inventor: QING, Shiming, Tianjin 300467 (CN); FU, Bin, Tianjin 300467 (CN); HUANG, Ke, Tianjin 300467 (CN)
(74) Representative: Botti, Mario
(86) International application number: PCT/CN2016/088993
(87) International publication number: WO 2017/156930

(57) **Abstract**

Disclosed are a bezel, a display module, and a display device. The bezel includes at least two spliced pieces, each of which includes L-shaped first and second wall faces, wherein: in two adjacent spliced pieces, the first wall face of one spliced piece includes a lapping section, and the first wall face of the other spliced piece includes an extending section extending to and lapping with the lapping section, wherein the extending section is fixed by a bolt to the lapping section. As compared with the prior art, in the technical solution according to the embodiments of the application, the adjacent spliced pieces can be connected without any additional secondary element, so that the structure of the bezel will become more compact, a space occupied by the bezel can be reduced, assembling of the bezel can be simplified, and a cost of producing the bezel can be lowered.

## Description

This application claims the benefit of Chinese Patent Application No. 201620215560.3, filed with the Chinese Patent Office on March 18, 2016 and entitled "Front frame, display module, and display device", and the benefit of Chinese Patent Application No. 201610158127.5, filed with the Chinese Patent Office on March 18, 2016 and entitled "Front frame, display module, and display device" which is hereby incorporated by reference in its entirety.

### TECHNICAL FIELD

The disclosure relates to the field of display technologies, and particularly to a bezel, a display module, and a display device.

### BACKGROUND

As the sciences and technologies are developing constantly, there are also constantly growing demands of consumers for liquid crystal displays, liquid crystal TV sets, and other display devices, and increasingly frequently renewed structures, appearances, performances, and other aspects of the display devices.

A display module of a liquid crystal display device typically includes a backlight module, a liquid crystal panel located on the front side of the backlight module, and a bezel located on the front side of the liquid crystal panel, where the bezel is connected with the backlight module to thereby fix the liquid crystal panel in position.

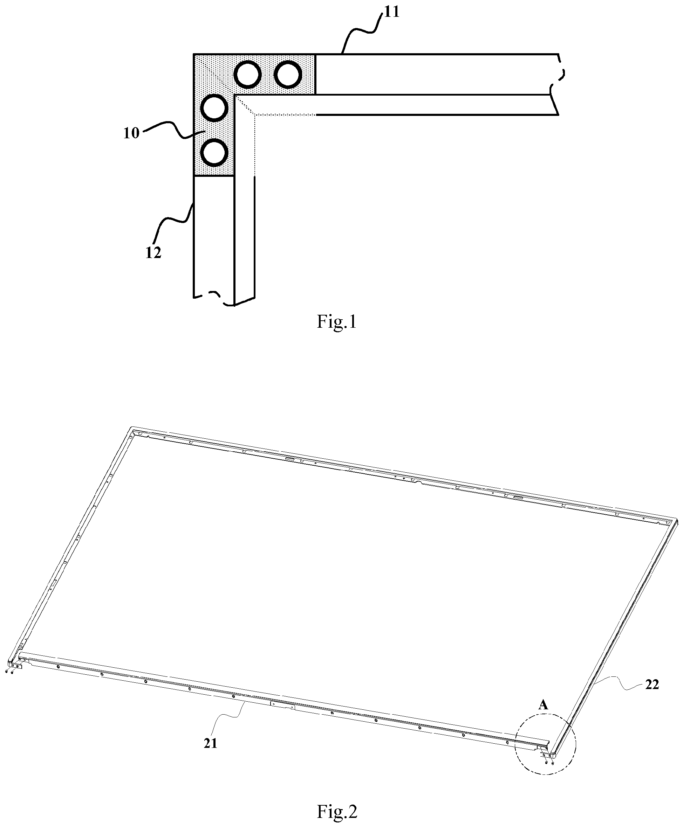

Since the bezel is typically formed by punching a metal plate, the frame structure thereof needs to be formed through splicing. As illustrated in Fig.1, two adjacent spliced pieces 11 and 12 are spliced at an angle using an L-shaped iron piece 10 and four bolts (not illustrated) in the prior art.

As the display device is further developing towards the trend of becoming thinned with the frame thereof being narrowed, the internal structure of the display device is also increasingly compact. However the inventors have identified during making of the application that a large space is occupied by the spliced structured of the existing bezel, which may hinder the display device from developing towards the trend of becoming thinned with the frame thereof being narrowed, and the sizes in the spliced structure of the existing bezel are required to be managed and controlled so highly precisely that it may be difficult to assemble the bezel, thus increasing a cost of producing the bezel.

### SUMMARY

Embodiments of the application provide a bezel, a display module, and a display device so as to reduce a space occupied by the bezel, to simplify assembling of the bezel, and to lower a cost of producing the bezel.

An embodiment of the application provides a bezel including at least two spliced pieces, each of which includes L-shaped first and second wall faces, wherein: in two adjacent spliced pieces, the first wall face of one spliced piece includes a lapping section, and the first wall face of the other spliced piece includes an extending section extending to and lapping with the lapping section, wherein the extending section is fixed by a bolt to the lapping section.

An embodiment of the application further provides a display module including the bezel according to any one of the technical solutions above. Since the bezel has the advantageous effect above, the display module can be easily thinned with the bezel thereof being narrowed, and can be produced at a low cost.

An embodiment of the application further provides a display device including the display module according to the technical solution above The display device can be easily thinned with the bezel thereof being narrowed, and can be produced at a low cost.

### BRIEF DESCRIPTION OF THE DRAWINGS

In order to make the technical solutions according to the embodiments of the application or in the prior art more apparent, the drawings to which a description of the embodiments or the prior art refers will be briefly introduced below, and apparently the drawings to be described below are merely illustrative of some of the embodiments of the application, and those ordinarily skilled in the art can derive from these drawings other drawings without any inventive effort. In the drawings:
Fig.1 is a schematic diagram of the spliced bezel in the prior art;
Fig.2 is a schematic explosive view of a bezel according to an embodiment of the application;
Fig.3 is a schematic enlarged view at A in Fig.2; and
Fig.4 is a schematic diagram of an extending section limited in position in a third spacing groove according to an embodiment of the application.

### Reference numerals:

In the prior art:
11, 12 - Spliced pieces; 10 - L-shaped iron piece

In the embodiments of the application:
21, 22 - Spliced pieces; 211, 221 - First wall face; 212, 222 - Second wall face; 25 - Lapping section; 26 - Extending section; 27 - Bolt; 28 - First tongue sheet; 29 - First spacing groove; 30 - Second tongue sheet; 31 - Second spacing groove; 32 - Third spacing groove; 33 - First blocking wall; 34 - Second blocking wall; 35 - First bolt hole; 36 - Second bolt hole.

### DETAILED DESCRIPTION

In order to make the objects, technical solutions, and advantages of the embodiments of the application more apparent, the technical solutions according to the embodiments of the application will be described below clearly and fully with reference to the drawings in the embodiments of the application, and apparently the embodiments described below are only a part but not all of the embodiments of the application. Based upon the embodiments here of the application, all the other embodiments which can occur to those skilled in the art without any inventive effort shall fall into the scope of the application.

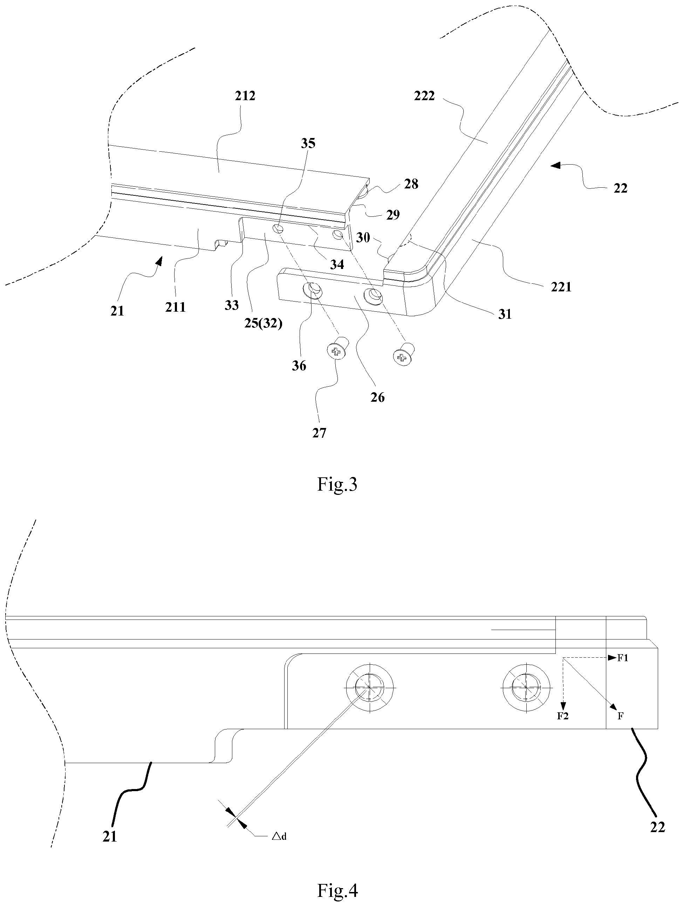

As illustrated in Fig.2 and Fig.3, a bezel according to an embodiment of the application includes at least two spliced pieces 21 and 22, each of which includes L-shaped first and second wall faces, that is, the spliced piece 21 includes L-shaped first and second wall faces 211 and 212, and the spliced piece 22 includes L-shaped first and second wall faces 221 and 222; and in two adjacent spliced pieces 21 and 22, the first wall face 211 of one spliced piece 21 includes a lapping section 25, and the first wall face 221 of the other spliced piece 22 includes an extending section 26 extending to and lapping with the lapping section 25, where the extending section 26 is fixed by a bolt 27 to the lapping section 25.

In the technical solution according to the embodiment of the application, the lapping section of the first wall face of one of the spliced pieces laps and is fixed by the bolt with the extending section of the first wall face of the other spliced piece, and as compared with the prior art, the adjacent spliced pieces can be connected without any additional secondary element, so that the structure of the bezel will become more compact, a space occupied by the bezel can be reduced, assembling of the bezel can be simplified, and a cost of producing the bezel can be lowered.

In the embodiment of the application, the "front" side of a component is defined as the side of the component proximate to a watcher looking at a display device as usual, and the "back" side of the component is defined as the side of the component away from the watcher looking at the display device as usual. Since the cross section of the bezel is L-shaped, the bezel can be connected with a backlight module to thereby fix a liquid crystal panel in position, so for a spliced piece of the bezel, the "inside surface" thereof refers to the side surface of the component proximate to the liquid crystal panel, and the "outside surface" thereof refers to the side surface of the component away from the liquid crystal panel.

In the embodiment above, if the second wall faces 212 and 222 are front wall faces of the spliced pieces 21 and 22 respectively, then the first wall faces 211 and 221 will be side wall faces of the spliced pieces 21 and 22 respectively. Moreover in another embodiment of the application, if the second wall faces of the two adjacent spliced pieces are alternatively side wall faces of the respective spliced pieces, then the first wall faces of the two adjacent spliced pieces will be front wall faces of the respective spliced pieces. Preferably in the structure according to an embodiment of the application illustrated in Fig.3, the bolt 27 is invisible from the front side of the bezel, and the gap between the spliced pieces is narrow as seen from the front side of the bezel, so that the front side surface of the bezel can be flattened and simplified. The number of bolts 27 will not be limited to any particular number, for example, there may be one, two or three bolts 27 as long as the assembly is as structurally strong as needed.

In the embodiment illustrated in Fig.2, there are two spliced pieces, where one spliced piece 21 is a long spliced piece, and the other spliced piece 22 includes two short sides and one long side, all of which are connected together. It shall be noted that the spliced pieces of the bezel will not be limited to any particular number and structure thereof, for example, the bezel can include two L-shaped spliced piece, or the bezel can include two long spliced pieces and two short spliced pieces, where every two adjacent spliced pieces can be spliced at their spliced ends as described above. The two adjacent spliced pieces may be spliced at an angle or straight dependent upon their particular structure, and in the embodiment illustrated in Fig.2, the spliced piece 21 and the spliced piece 22 are spliced at an angle, and the spliced piece 21 is spliced at the left end thereof with the spliced piece 22 in a symmetric way to the way in which the spliced piece 21 is spliced at the right end thereof with the spliced piece 22.

Further referring to Fig.3, in this embodiment, in two adjacent spliced pieces 21 and 22, there are a first tongue sheet 28 and a first spacing groove 29 at an end of the second wall face 212 of one spliced piece 21, and there are a second spacing groove 31 engaged with the first tongue sheet 28, and a second tongue sheet 30 engaged with the first spacing groove 29, at an end of the second wall face 222 of the other spliced piece 22. The first tongue sheet 28 and the second tongue sheet 30 are arranged displaced from each other, where the first tongue 28 is limited in position by the second spacing groove 31, and the second tongue sheet 30 is limited in position by the first spacing groove 29, so that the spliced pieces can be convenient to assemble, and the second wall faces 212 and 222 of the two spliced pieces 21 and 22 can be restrained by each other to thereby reduce the difference in height between their front spliced faces for the purpose of flat splicing.

Preferably the first spacing groove 29 and the second spacing groove 31 are located respectively on the inner surfaces of the respective second wall faces 212 and 222 so that the first tongue sheet 28 and the second tongue sheet 30 are invisible from the front side of the bezel, and the gap between the spliced pieces is narrow as seen from the front side of the bezel, so that the front side surface of the bezel can be flattened and simplified.

In the embodiment illustrated in Fig.3, the first tongue sheet 28 and the second tongue sheet 30 are arc-shaped, or optionally the first tongue sheet 28 and the second tongue sheet 30 can alternatively be shaped in respective triangles, trapezoids, rectangles, etc. Moreover the first tongue sheet 28 and the second tongue sheet 30 may or may not be shaped in the same sizes.

As illustrated in Fig.3, the lapping section 25 includes a third spacing groove 32 engaged with the extending section 26. Particularly the third spacing groove 32 includes a first blocking wall 33 and a second blocking wall 34, both of which are L-shaped; and the lapping section 25 includes at least one first bolt hole 35, and the extending section 26 includes second bolt holes 36 corresponding to the respective first bolt holes 35. The third spacing groove 32 can be located on the outside surface (as illustrated) or the inner surface of the lapping section 25. The third spacing groove 32 limits the extending section 26 in position to thereby facilitate alignment of the two spliced pieces 21 and 22 so as to improve the efficiency of assembling.

In a preferred embodiment of the application, the extending section 26 and the lapping section 25 to be assembled are sized that if the extending section 26 is limited in position in the third spacing groove 32 of the lapping section 25, then the center of the second bolt hole 36 will be farther from the first blocking wall 33 and/or the second blocking wall 34 than the center of the corresponding first bolt hole 35. For example, as illustrated in Fig.3 and Fig.4, if the extending section 26 is limited in position in the third spacing groove 32 of the lapping section 25, then the center of the second bolt hole 36 will be offset by Δd=0.1∼0.3 millisecond at an angle of 45 degrees away from the first blocking wall 33 and the second blocking wall 34 relative to the center of the corresponding bolt hole 35.

Thus as the bolt 27 is being screwed into the second bolt hole 36 and the first bolt hole 35, which are not aligned, the spliced piece 21 will be pressed firmly against the spliced piece 22 by a locking force of threads in the rightward direction illustrated in Fig.4 to thereby greatly reduce the difference in height between their front side spliced faces, and the gap between the two spliced pieces 21 and 22 so as to improve the precision of splicing the bezel.

An embodiment of the application further provides a display module including the bezel according to any one of the technical solutions above. Since the bezel has the advantageous effect above, the display module can be easily thinned with the bezel thereof being narrowed, and can be produced at a low cost.

An embodiment of the application further provides a display device including the display module according to the technical solution above The display device can be easily thinned with the bezel thereof being narrowed, and can be produced at a low cost. The display device will not be limited to any particular type, for example, the display device can be a liquid crystal TV set, a liquid crystal display, a tablet computer, an e-paper, etc.

Lastly it shall be noted that the respective embodiments above are merely intended to illustrate but not to limit the technical solution of the application; and although the application has been described above in details with reference to the embodiments above, those ordinarily skilled in the art shall appreciate that they can modify the technical solution recited in the respective embodiments above or make equivalent substitutions to a part of the technical features thereof; and these modifications or substitutions to the corresponding technical solution shall also fall into the scope of the application as claimed.

## Claims

1. A bezel, comprising at least two spliced pieces, each of which comprises L-shaped first and second wall faces, wherein: in two adjacent spliced pieces, the first wall face of one spliced piece comprises a lapping section, and the first wall face of the other spliced piece comprises an extending section extending to and lapping with the lapping section, wherein the extending section is fixed by a bolt to the lapping section.

2. The bezel according to claim 1, wherein in two adjacent spliced pieces and, there are a first tongue sheet and a first spacing groove at an end of the second wall face of one spliced piece, and there are a second spacing groove engaged with the first tongue, and a second tongue sheet engaged with the first spacing groove, at an end of the second wall face of the other spliced piece.

3. The bezel according to claim 2, wherein the first spacing groove and the second spacing groove are located respectively on inner surfaces of their corresponding second wall faces.

4. The bezel according to claim 2, wherein the first tongue sheet is shaped in an arc, a triangle, a trapezoid or a rectangle; and the second tongue sheet is shaped in an arc, a triangle, a trapezoid or a rectangle.

5. The bezel according to claim 1, wherein the lapping section comprises a third spacing groove engaged with the extending section.

6. The bezel according to claim 5, wherein the third spacing groove is located on an outside surface or the inner surface of the lapping section.

7. The bezel according to claim 5, wherein the third spacing groove comprises L-shaped first and second blocking walls; and the lapping section comprises at least one first bolt hole, and the extending section comprises second bolt holes corresponding to the respective first bolt holes; and
if the extending section is limited in position in the third spacing groove of the lapping section, then the center of the second bolt hole will be farther from the first blocking wall and/or the second blocking wall than the center of the corresponding first bolt hole.

8. The bezel according to claim 7, wherein if the extending section is limited in position in the third spacing groove of the lapping section, then the center of the second bolt hole will be offset by 0.1∼0.3 millisecond at an angle of 45 degrees away from the first blocking wall and the second blocking wall relative to the center of the corresponding bolt hole.

9. The bezel according to any one of claims 1 to 8, wherein the second wall faces of the two adjacent spliced pieces are front wall faces of the respective spliced pieces.

10. The bezel according to claim 9, wherein the two adjacent spliced pieces are spliced at an angle or straight.

11. The bezel according to claim 9, wherein there are two spliced pieces, where one spliced piece is a long spliced piece, and the other spliced piece comprises two short sides and one long side, all of which are connected together.

12. A display module, comprising the bezel according to any one of claims 1 to 11.

13. A display device, comprising the display module according to claim 12.
